# FASCICULE DE BREVET EUROPEEN

(11) **EP 3 513 476 B1**
(45) Date de publication et mention de la délivrance du brevet: **01.11.2023**
(21) Numéro de dépôt: 17780800.3
(22) Date de dépôt: 12.09.2017
(51) Int. Cl.: B64D 41/00, H02J 3/28, H02J 7/34, F03D 9/32, H02J 3/32

(54) **PROCÉDÉ ET SYSTÈME D'ALIMENTATION D'UNE CHARGE ÉLECTRIQUE DANS UN AÉRONEF**
STROMVERSORGUNGSVERFAHREN UND STROMVERSORGUNGSSYSTEM FÜR EINE ELEKTRISCHE LAST IN EINEM LUFTFAHRZEUG
POWER SUPPLY METHOD AND POWER SUPPLY SYSTEM FOR AN ELECTRICAL LOAD WITHIN AN AIRCRAFT

(30) Priorité: 13.09.2016 FR 1658501
(43) Date de publication de la demande: 24.07.2019
(73) Titulaire: Safran, 75015 Paris (FR); Safran Electrical & Power, 31702 Blagnac Cedex (FR)
(72) Inventeur: SALANNE, Jean-Philippe, 77550 Moissy-Crayamel (FR); PETIBON, Stéphane, 77550 Moissy-Crayamel (FR); ROUGIER, Florent, 77550 Moissy-Crayamel (FR); DUQUERROIS, Antoine, 77550 MOISSY-CRAMAYEL (FR)
(74) Mandataire: Cabinet Beau de Loménie
(86) Numéro de dépôt international: PCT/FR2017/052415
(87) Numéro de publication internationale: WO 2018/051003

(56) Documents cités:
- EP-A1- 0 657 985
- EP-A1- 2 530 780
- EP-A2- 2 651 007
- EP-B1- 0 657 985
- EP-B1- 2 530 780
- FR-A1- 2 936 220
- FR-A1- 2 976 558
- US-A1- 2007 228 735
- US-A1- 2012 221 157
- US-A1- 2014 032 002

## Description

### Arrière-plan de l'invention

L'invention concerne l'hybridation, c'est-à-dire l'utilisation simultanée, de différentes sources d'énergie électrique dans un aéronef. Plus précisément, l'invention concerne un procédé ainsi qu'un système d'alimentation en énergie électrique pour des charges électriques dans un aéronef réalisés à partir d'une source principale et d'une source auxiliaire. L'invention a trait à une source d'alimentation électrique. Par conséquent, celle-ci n'affecte pas les consommateurs électriques présents sur le réseau électrique dans le sens où elle n'impose pas des délestages de charge électrique sur ce dernier. Le but de la source est de fournir la puissance électrique demandée par le réseau dans la limite de son dimensionnement.

Dans la suite de la description, l'aéronef considéré est, à titre d'exemple, un avion.

Une source électrique de secours couramment mise en oeuvre dans un avion se présente sous la forme d'une éolienne de secours, fréquemment désignée sous la dénomination « RAT », acronyme anglais de « Ram Air Turbine ».

Une éolienne de secours est déployée dans des situations d'urgence à bord d'un avion, pour générer une puissance électrique adaptée permettant à l'avion de voler suffisamment longtemps jusqu'à son atterrissage. L'éolienne de secours comporte une hélice formée de pales dont la vitesse de rotation est fonction de la vitesse de l'air circulant contre l'avion et de la charge électrique appelée par les différents bus d'alimentation électrique de l'avion. La rotation de cette hélice entraine un générateur qui fournit la puissance de secours nécessaire à un bus alimentant électriquement un certain nombre de charges électriques critiques telles les commandes de vol et des circuits avioniques clés.

Typiquement, une éolienne de secours est dimensionnée de sorte à fournir une valeur maximale de puissance en vue de répondre à des pics éventuels de consommation du réseau électrique de l'avion. En pratique, ces pics surviennent rarement. La plupart du temps, la demande en puissance électrique est bien plus faible et l'éolienne de secours est capable de fournir une puissance électrique plus importante que le besoin.

Il en résulte des éoliennes de secours surdimensionnées, encombrantes, lourdes et coûteuses.

Pour éviter ce surdimensionnement, il est connu d'hybrider en parallèle de la source électrique principale, ici l'éolienne de de secours, une source électrique auxiliaire, par exemple une source formée de supercondensateurs, de batteries ou autres, afin de fournir simultanément la puissance qui fait défaut.

D'autres types d'hybridations électriques peuvent être réalisées sur le même principe, à titre d'exemples :
- l'association parallèle d'une pile à combustible en tant que source électrique principale avec une source électrique auxiliaire, afin de prévenir tout risque de noyage de la pile à combustible et/ou de détérioration prématurée de celle-ci ;
- l'association parallèle d'une unité de puissance auxiliaire alimentée en carburant en tant que source électrique principale avec une source électrique auxiliaire afin de prévenir tout risque de surconsommation en carburant ou de surchauffe de cette unité.

L'hybridation d'une source électrique principale avec une source électrique auxiliaire est la plupart du temps réalisée sur un modèle de partage fréquentiel, à l'image de la demande US2009121546. Ce modèle consiste à découper fréquentiellement un profil de puissance en valeur moyenne et fluctuante : la source principale fournit, à titre d'exemple la puissance moyenne à basse fréquence, tandis que la source auxiliaire fournit la puissance nécessaire au-delà d'une fréquence prédéterminée.

Une telle approche permet un dimensionnement cohérent des sources électriques et nécessite de réaliser un filtrage fréquentiel de la puissance à fournir et donc des mesures instantanées (ex : en courants) au niveau des charges électriques à alimenter.

Par ailleurs, le choix d'utiliser une source électrique plutôt qu'une autre basé sur un critère fréquentiel ne permet pas d'optimiser l'utilisation de ces sources. Il n'est notamment pas possible d'effectuer un prélèvement maximum de puissance sur la source électrique principale. Par exemple, lorsque la source principale est une éolienne de secours, la puissance disponible ne dépend pas de sa fréquence de sollicitation mais de la vitesse et de la densité de l'air ambiant entraînant ses pales. La source principale n'est capable de fournir une puissance demandée, décomposable en une puissance moyenne et une puissance fluctuante, qu'en fonction d'une certaine vitesse de l'air ambiant. Dans le cas de l'éolienne de secours, celle-ci ne pourra donc fournir qu'une puissance maximale dépendant de la vitesse de l'air entraînant sa rotation. Ainsi, en se limitant à un critère fréquentiel, en l'absence d'instrumentation permettant de mesurer la vitesse et la densité de l'air ambiant, ainsi qu'en l'absence d'une logique de contrôle pour déterminer à partir de ces mesures la puissance électrique à prélever sur l'éolienne de secours, on risque d'observer une sous-utilisation de l'éolienne de secours lorsque la vitesse de l'air est élevée (l'éolienne produit plus de puissance que nécessaire) ou une situation de calage si la vitesse de l'air est insuffisante (l'éolienne n'est pas capable de fournir une puissance demandée à cause d'une vitesse de l'avion trop faible).

En outre, le réglage d'une fréquence de partage entre deux sources électriques peut s'avérer complexe à déterminer, notamment dans le cas d'un réseau électrique à courant alternatif. Un tel partage fréquentiel peut impliquer alors d'avoir une communication permanente entre les différentes sources électriques. A titre d'exemple, lorsque la source électrique principale est une pile à combustible, le partage fréquentiel peut être réalisé en effectuant des mesures de courants au niveau de différents consommateurs électriques, puis en communicant à la source principale et à la source auxiliaire ces mesures, afin d'adapter la consommation prélevée sur chaque sources.

En vue d'optimiser la consommation électrique de sources hybridées, une autre solution connue repose sur l'implémentation d'algorithmes de suivi du point maximal de puissance, communément connus sous l'appellation MPPT, acronyme anglais de « Maximum Power Point Tracking ». Une telle solution permet alors d'utiliser la source principale hybridée au maximum de son potentiel, mais implique des algorithmes souvent complexes.

Le document US 2014/032002 A1 concerne un dispositif de stabilisation d'un système électrique pour aéronef.

En l'état, les solutions précitées pour l'utilisation simultanée de sources électriques dans un aéronef s'avèrent limitées, notamment en termes d'efficacité et de complexité de mise en oeuvre.

### Objet et résumé de l'invention

La présente invention a pour but de remédier aux inconvénients précités. Plus précisément, la présente invention a pour but de proposer une solution permettant d'optimiser en temps réel la consommation électrique prélevée sur des sources hybridées tout en limitant la complexité de mise en oeuvre d'une telle solution.

A cet effet, l'invention propose un procédé d'alimentation en énergie électrique d'au moins une charge électrique dans un aéronef selon la revendication indépendante 1.

Ce procédé est particulièrement avantageux en ce qu'il est temps réel et permet d'optimiser à tout instant la consommation prélevée sur la source principale d'énergie électrique. L'ensemble des opérations décrites ci-dessus sont réalisées en parallèle, de manière simultanée et en continu au cours du temps. En outre, ce procédé ne nécessite pas de réaliser une communication entre la source principale et la source auxiliaire. En effet, la coordination de ces sources pour alimenter les charges électriques de l'aéronef est uniquement basée sur la détermination du niveau d'utilisation de la source principale, déterminée à titre d'exemple par rapport à la tension du réseau électrique alimentant les charges électriques de l'aéronef. Ainsi, contrairement à l'état de l'art, ce procédé ne nécessite pas de mesurer les courants des différents consommateurs électriques, ni de communiquer ces valeurs aux sources. Un tel procédé est par ailleurs simple à implémenter et n'implique pas d'algorithme de commande complexe. La programmation des calculateurs s'en voit donc elle aussi simplifiée.

Selon un autre aspect, ce procédé peut comprendre une commande de diminution de la tension électrique fournie par la source principale vers une valeur préconfigurée lorsque le niveau d'utilisation de la source principale est supérieur à un niveau d'utilisation prédéterminé.

Selon un autre aspect, ce procédé peut comprendre une étape d'extinction de l'alimentation électrique fournie par la source auxiliaire lorsque la tension mesurée en sortie de la source principale est supérieure à la valeur seuil de tension prédéterminée.

Selon un autre aspect, dans ce procédé, la source principale est une éolienne de secours, et ledit au moins un paramètre instantané est le couple de l'éolienne, la fréquence électrique d'alimentation de la charge électrique, la vitesse de rotation des pales de l'éolienne et/ou le pas des pales de l'éolienne.

Selon un autre aspect, dans ce procédé la source principale est une pile à combustible, et ledit au moins un paramètre instantané est un débit de réactifs, une température de la pile et/ou un taux d'hydratation de la pile.

Selon un autre aspect, dans ce procédé, la source principale est une unité de puissance auxiliaire, et ledit au moins un paramètre instantané est un débit de carburant circulant dans cette unité et/ou une température de cette unité.

Un mode de réalisation, ne faisant pas partie de la présente invention, propose également un procédé d'alimentation en énergie électrique d'au moins une charge électrique dans un aéronef, ce procédé comprenant :
- l'alimentation électrique de ladite au moins une charge électrique par une source principale rotative génératrice d'énergie électrique, la fréquence de rotation de la source principale rotative étant régulée dans un intervalle de fréquence prédéterminé ;
- la mesure de la fréquence électrique en sortie de la source principale rotative ;
- la comparaison de la fréquence électrique mesurée avec une valeur seuil de fréquence prédéterminée ;
- la commande de l'alimentation de ladite au moins une charge électrique par une source auxiliaire de stockage d'énergie électrique à une fréquence électrique synchronisée sur la fréquence électrique de la source principale lorsque la fréquence électrique en sortie de la source principale atteint la valeur seuil de fréquence, de manière à fournir un complément d'alimentation électrique à la charge électrique.

Dans un exemple de réalisation, un tel procédé peut en outre comprendre :
- la mesure de la fréquence de rotation de la source principale ;
- l'ajustement de la tension de la source principale en fonction de la fréquence de rotation mesurée.

Un tel procédé est particulièrement avantageux en ce qu'il est temps réel et adapte à tout instant la consommation prélevée sur la source principale. Un tel procédé ne nécessite par ailleurs aucune modification structurale de la source principale rotative, un tel procédé est donc applicable à toute source principale rotative. En outre, ce procédé ne nécessite pas de réaliser une communication entre la source principale et la source auxiliaire. En effet, la coordination de ces sources pour alimenter les charges électriques de l'aéronef est uniquement basée sur la détermination de la fréquence de rotation de la source principale. La fréquence de rotation de la source principale peut être déduite à partir de la fréquence électrique en sortie de cette source, cette détermination de fréquence étant couramment implémentée pour les sources principales rotatives existantes. Ainsi, contrairement à l'état de l'art, ce procédé ne nécessite pas de mesurer les courants des différents consommateurs électriques, ni de communiquer ces valeurs aux sources. Un tel procédé est par ailleurs simple à implémenter et n'implique pas d'algorithme de commande complexe. La programmation des calculateurs s'en voit donc une fois encore simplifiée.

L'invention propose également un système d'alimentation en énergie électrique d'au moins une charge électrique dans un aéronef selon la revendication indépendante 7.

Selon un aspect de ce système, le premier dispositif de contrôle est en outre configuré pour commander la diminution de la tension électrique fournie par la source principale vers une valeur préconfigurée lorsque le niveau d'utilisation de la source principale est supérieur à un niveau d'utilisation prédéterminé.

Selon un aspect de ce système, le deuxième dispositif de contrôle est en outre configuré pour commander l'extinction de l'alimentation électrique fournie par la source auxiliaire lorsque la tension mesurée en sortie de la source principale est supérieure à la valeur seuil de tension prédéterminée.

Selon un aspect de ce système, la source principale est une éolienne de secours, et ledit au moins un paramètre instantané est le couple de l'éolienne, la fréquence électrique d'alimentation de la charge électrique, la vitesse de rotation des pales de l'éolienne et/ou le pas des pales de l'éolienne.

Selon un aspect de ce système, la source principale est une pile à combustible, et ledit au moins un paramètre instantané est un débit de réactifs, une température de la pile et/ou un taux d'hydratation de la pile.

Selon un aspect de ce système, la source principale est une unité de puissance auxiliaire, et ledit au moins un paramètre instantané est un débit de carburant circulant dans cette unité et/ou une température de cette unité.

Un mode de réalisation, ne faisant pas partie de la présente invention, propose également un système d'alimentation en énergie électrique d'au moins une charge électrique dans un aéronef, ce système comprenant
- une source principale rotative génératrice d'énergie électrique ;
- une source auxiliaire de stockage d'énergie électrique connectée en parallèle de la source principale par l'intermédiaire d'un convertisseur de puissance continu alternatif DC/ AC ;
- la source principale rotative et le convertisseur étant en outre connectés électriquement à au moins une charge électrique ;
   le système comprenant un premier dispositif de contrôle configuré pour
- commander l'alimentation électrique de ladite au moins une charge électrique par la source principale rotative génératrice d'énergie électrique, la fréquence de rotation de la source principale rotative étant régulée dans un intervalle de fréquence prédéterminé ;
   le système comprenant en outre un deuxième dispositif de contrôle configuré pour
- récupérer une mesure de la fréquence électrique en sortie de la source principale rotative ;
- comparer la mesure de fréquence de fréquence électrique avec une valeur seuil de fréquence prédéterminée ;
- commander via l'intermédiaire du convertisseur l'alimentation électrique de ladite au moins une charge électrique par la source auxiliaire de stockage d'énergie électrique à une fréquence électrique synchronisée sur la fréquence électrique de la source principale, lorsque la fréquence électrique en sortie de la source principale atteint la valeur seuil de fréquence, de manière à fournir un complément d'alimentation électrique à la charge électrique.

Dans un exemple de réalisation, le premier dispositif de contrôle peut en outre être configuré pour :
- récupérer une mesure de la fréquence de rotation de la source principale rotative ;
- ajuster la tension de la source principale rotative en fonction de la fréquence de rotation mesurée.

Selon un aspect des différents systèmes précédemment décrits, la source principale est une pile à combustible, une unité de puissance auxiliaire, une turbine à gaz ou une éolienne de secours réalisant une source de tension.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre un dispositif d'alimentation en énergie électrique dans un aéronef selon un mode de réalisation,
- la figure 2 illustre les caractéristiques statiques en tension d'une source d'énergie principale et d'une source d'énergie auxiliaire selon un mode de réalisation.

### Description détaillée de modes de réalisation

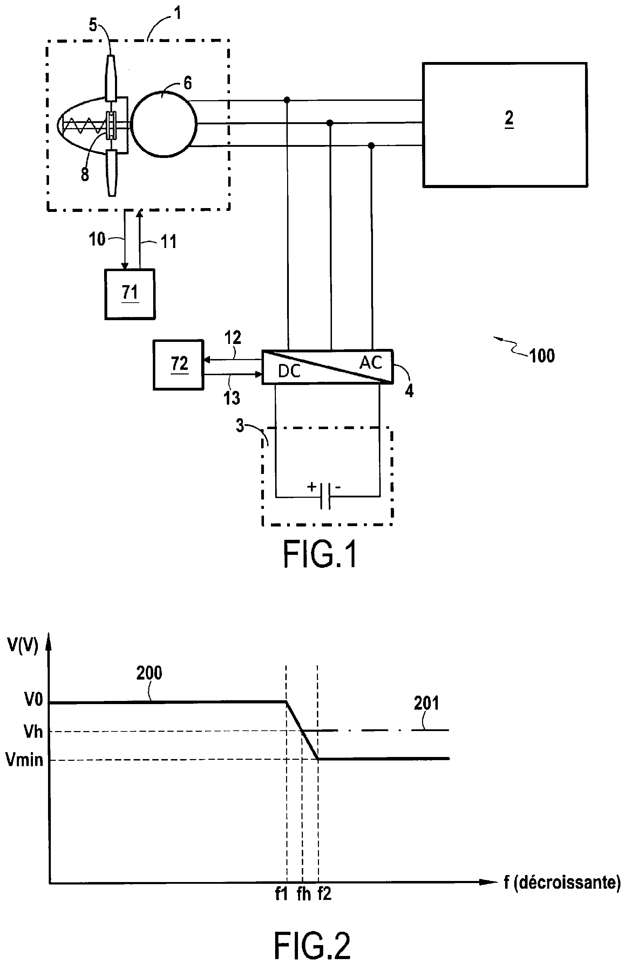

La figure 1 illustre un dispositif d'alimentation 100 en énergie électrique dans un aéronef selon un mode de réalisation comprenant:
- une source principale 1 génératrice d'énergie électrique, communément désignée sous l'appellation « génératrice principale », connectée à au moins une charge électrique 2 ;
- une source auxiliaire 3 de stockage d'énergie électrique connectée en parallèle de la source principale d'énergie électrique par l'intermédiaire d'un convertisseur 4, par exemple un convertisseur de puissance continu alternatif DC/ AC pour un réseau électrique fonctionnant en courant alternatif.

Dans l'exemple de la figure 1, la source principale 1 génératrice d'énergie est une éolienne de secours comprenant des pales 5 ainsi qu'un générateur 6 électrique relié à la charge électrique 2 de sorte à alimenter électriquement celle-ci. Cependant d'autres sources principales 1 génératrices d'énergie peuvent être envisagées, à titre d'exemple : une pile à combustible, une turbine à gaz ou encore une unité de puissance auxiliaire alimentée en carburant.

La source auxiliaire 3 de stockage d'énergie électrique peut être réalisée par un ou plusieurs éléments de stockage telles des batteries d'accumulateur, des supercapacités, un volant d'inertie, ou encore par l'association de ces différents éléments.

La source auxiliaire 3 de stockage d'énergie électrique permet d'alimenter électriquement le convertisseur 4. Le convertisseur 4 délivre alors à la charge électrique 2, si besoin, une puissance électrique supplémentaire en complément de la source principale 1. Une telle puissance complémentaire est, par exemple, délivrée en vue de prévenir tout risque de calage d'une éolienne de secours, ou de noyage d'une pile à combustible, utilisées en tant que source principale 1, lorsque le niveau d'utilisation de la source principale 1 atteint un niveau prédéterminé.

Dans les modes de réalisations décrits ci-dessous, la source principale 1 et la source auxiliaire 3 sont des sources de tension. Cependant, une de ces sources peut être une source de courant.

Par ailleurs, bien qu'une une seule charge électrique 2 soit ici représentée, il est entendu que la source principale 1 génératrice et le convertisseur 4 peuvent être reliés par l'intermédiaire d'un bus d'alimentation électrique à une pluralité de charges électriques 2. Les charges électriques 2 sont, à titre d'exemple, des actionneurs de contrôle de vol, des unités de calcul, ou encore des charges électriques essentielles au bon déroulement du vol de l'aéronef.

Selon divers modes de réalisation l'alimentation de la charge électrique 2 peut être réalisée comme suit.

Selon un premier mode de réalisation, la source principale 1 génératrice d'énergie et la source auxiliaire 3 de stockage d'énergie électrique sont préconfigurées/pré-dimensionnées, de sorte à pouvoir commander/contrôler leurs caractéristiques statiques en tension lors de leur utilisation.

A titre d'exemple, lorsque la source principale 1 est une éolienne de secours, son dimensionnement peut consister à préconfigurer le générateur 6 de sorte à ce que celui-ci délivre une tension constante V0 dans des conditions nominales d'utilisation prédéfinies. Ces conditions nominales d'utilisation peuvent, par exemple, consister en une fréquence électrique dépendante des conditions d'utilisation de l'éolienne de secours (vitesse de l'air, charge électrique appelée).

La figure 2 illustre, à titre d'exemple, en ordonnée une caractéristique statique 200 en tension V d'une éolienne de secours pré-dimensionnée en fonction d'une fréquence électrique décroissante f en abscisse délivrée par celle-ci. Dans le mode de réalisation illustré, la tension V est volontairement corrélée à la fréquence f. Comme il peut être observé sur cette courbe, la caractéristique statique 200 de la tension V délivrée par l'éolienne de secours est dimensionnée de manière à fournir une valeur constante V0 tant que la fréquence f est dans une bande de fréquence supérieure à une première valeur seuil prédéterminée f1. La fréquence f1 est par exemple pré-identifiée comme une valeur de fréquence caractérisant une augmentation du niveau d'utilisation de la source principale 1, c'est-à-dire une augmentation de la puissance prélevée par la charge électrique 2 sur cette source. Au-delà de cette fréquence f1, le niveau d'utilisation de la source principale 1 peut continuer à croitre jusqu'à se rapprocher d'une situation de surutilisation de la source principale 1, proche d'une condition de calage que l'on souhaite éviter. La bande de fréquence est alors dimensionnée pour correspondre aux conditions nominales choisies pour lesquelles l'éolienne de secours délivre la tension constante V0.

La caractéristique statique 201 en tension délivrée par la source auxiliaire 3 est quant à elle préconfigurée à une valeur constante de tension Vh inférieure à la valeur V0. Lorsque la fréquence de l'éolienne de secours est inférieure à la valeur seuil prédéterminée f1, c'est-à-dire lorsque le niveau d'utilisation de la source principale 1 augmente, sa caractéristique en tension peut être alors commandée de manière à décroître. La puissance électrique délivrée par l'éolienne de secours demeure néanmoins constante. La valeur seuil prédéterminée f1 correspond à une fréquence à partir de laquelle l'éolienne de secours ne délivre alors plus dans des conditions nominales la valeur de tension V0 à la charge électrique 2. On rappelle ici que cette valeur seuil f1, résulte du pré-dimensionnement choisi pour la caractéristique statique 200 en tension de la source principale 1. Il est aussi possible de s'affranchir d'un tel pré-dimensionnement. En son absence, la source principale 1 pourrait alors continuer à délivrer la tension V0, tandis que la vitesse de rotation chuterait jusqu'à l'atteinte d'une limite de calage de l'éolienne de secours.

Afin de parer à tout risque de calage de l'éolienne de secours, lorsque la fréquence atteint le niveau fh et la tension V atteint le niveau Vh de la source auxiliaire 3, la source auxiliaire 3 est alors commandée de manière à délivrer la tension Vh par l'intermédiaire du convertisseur 4. La fréquence fh est par exemple choisie comme une valeur de fréquence caractérisant une surutilisation de la source principale 1, proche d'une condition de calage et nécessitant donc le déclenchement de l'alimentation électrique de la source auxiliaire 3.

Optionnellement, la tension de l'éolienne de secours peut être commandée afin de diminuer (linéairement ou non) sa tension jusqu'à une valeur préconfigurée Vmin atteinte à une fréquence f2 prédéterminée, inférieure à la fréquence fh, lorsque la source auxiliaire 3 délivre la tension Vh. La diminution de la tension de la source principale 1 résulte une fois encore du pré-dimensionnement choisi pour sa caractéristique statique 200, la diminution de la tension V impliquant le déclenchement de l'alimentation électrique de la source auxiliaire 3 dès l'atteinte de la tension Vh. En effet, en l'absence d'un tel pré-dimensionnement, la source principale 1 pourrait continuer à délivrer une tension V0 constante jusqu'à atteindre sa limite de calage.

Les mêmes types de caractéristiques statiques en tension peuvent être pré-dimensionnées pour une source principale 14 n'étant pas nécessairement une éolienne de secours, par exemple une pile à combustible. La tension V0 peut alors être la tension constante délivrée par la pile dans des conditions nominales d'utilisation, et Vh la tension de la source auxiliaire 3 délivrée afin de parer à tout risque de noyage de la pile à combustible.

Plus généralement, les caractéristiques statiques en tension de la source principale 1 et de la source auxiliaire 3 sont dimensionnées en fonction d'un niveau d'utilisation de la source principale 1. Ce niveau d'utilisation est déterminé, par exemple mesuré ou observé, à partir d'au moins un paramètre instantané caractérisant cette source. Dans l'exemple précédent, la décision de commande de l'alimentation électrique 3 de la source auxiliaire est réalisée en fonction de la variation de tension V de l'éolienne de secours. Cette tension V est corrélée à la fréquence f qui est alors ici le paramètre instantané caractérisant le niveau d'utilisation de l'éolienne de secours.

Cependant, en fonction de la source principale 1 choisie, d'autres paramètres peuvent être considérés pour déterminer le niveau d'utilisation de la source principale 1. Par exemple lorsque la source principale 1 est :
- une éolienne de secours, son niveau d'utilisation peut être déterminé à partir d'au moins un des paramètres instantanés suivants : fréquence électrique d'alimentation de la charge électrique 2, vitesse de rotation des pales 5 de l'éolienne, pas des pales 5, densité de l'air, vitesse de l'avion, couple de l'éolienne de secours ;
- une pile à combustible, son niveau d'utilisation peut être déterminé à partir d'au moins un des paramètres instantanés suivants : température de la pile, débits et dérivées du débit de réactifs (comburants ou combustibles), taux d'hydratation de la pile, pression et dérivées de la pression des réactifs, différence de pression entre les réactifs ;
- une turbine à gaz, son niveau d'utilisation peut être déterminé à partir d'au moins un des paramètres instantanés suivants : fréquence du réseau électrique alimentant la charge électrique 2, vitesse de rotation de l'arbre de la turbine à gaz, température de la turbine, débits ou dérivées du débit de kérosène ;
- une unité de puissance auxiliaire, son niveau d'utilisation peut être déterminé à partir d'au moins un des paramètres instantanés suivants : fréquence électrique d'alimentation de la charge électrique 2, température de l'unité de puissance auxiliaire, débits ou dérivées du débit de kérosène.

Ainsi, l'axe des abscisses de l'exemple particulier de la figure 2, peut donc être généralisé à tout paramètre prédéterminé caractérisant le niveau d'utilisation de la source principale 1 lors du dimensionnement des courbes statiques en tension de la source principale 1 et de la source auxiliaire 3.

Une fois les courbes statiques en tension de la source principale 1 et la source auxiliaire 3 préconfigurées/pré-dimensionnées, l'alimentation en énergie de la charge électrique 2 peut être alors réalisée comme suit.

La charge électrique 2 est alimentée en énergie électrique par la source principale 1, par exemple alimentée à une tension V0 dans l'exemple particulier décrit précédemment.

Durant l'alimentation de la charge électrique 2 par la source principale 1, le niveau d'utilisation de la source principale 1 est déterminé à partir d'au moins un paramètre instantané caractérisant cette source. Le ou les paramètres instantanés sont choisis parmi les paramètres précédemment cités, à titre d'exemple, on peut considérer la vitesse des pales 5 d'une éolienne de secours ou le taux d'hydratation d'une pile à combustible pour déterminer le niveau d'utilisation de ces sources principales 1 par la charge électrique 2.

Le niveau d'utilisation de la source principale 1 est alors comparé à un niveau d'utilisation prédéterminé. Ce niveau d'utilisation prédéterminé est à titre d'exemple corrélé à la fréquence f1 de la figure 2, fréquence à partir de laquelle l'éolienne de secours ne délivre plus dans des conditions nominales la valeur de tension V0 à la charge électrique 2. Pour rappel, une telle fréquence f1, résulte du pré-dimensionnement choisi pour la caractéristique statique en tension de la source principale 1. A partir de cette fréquence f1, le niveau d'utilisation de la source principale 1 commence alors à augmenter. Dans un autre exemple, si la source principale 1 était une pile à combustible, ce niveau d'utilisation pourrait être corrélé à un taux d'hydratation prédéterminé à partir duquel la pile ne pourrait plus fournir dans des conditions nominales une puissance constante à la charge électrique 2. Plus généralement, l'augmentation du niveau d'utilisation traduit le rapprochement de la source principale 1 vers son point de calage. Il est identifié un niveau d'utilisation prédéterminé de la source principale 1, précédant le niveau d'utilisation traduisant l'atteinte d'une condition de calage que l'on souhaite éviter.

Ainsi, l'alimentation de la source principale 1 est ajustée en fonction de son niveau d'utilisation. Notamment, si le niveau d'utilisation de la source principale 1 est supérieur ou égal au niveau d'utilisation prédéterminé, une diminution continue de la tension V délivrée par la source principale 1 peut être commandée. Par exemple, sur la figure 2, la tension de la source principale 1 est diminuée de manière continue jusqu'à une tension Vmin atteinte à une fréquence f2. La puissance électrique de la source principale 1 n'est pas commandée, et reste quant à elle constante.

Parallèlement, une mesure de tension est réalisée aux bornes du convertisseur 4. Avantageusement, cette mesure de tension permet de déterminer le niveau d'utilisation de la source principale 1.

Cette mesure de tension peut être comparée directement à une valeur seuil de tension prédéterminée, cette dernière étant corrélée à un paramètre instantané traduisant une situation proche de la surutilisation de la source principale 1. Cette valeur seuil de tension est à titre d'exemple la tension Vh corrélée à la fréquence fh.

En alternative, la mesure de tension peut être utilisée pour déduire le niveau d'utilisation de la source principale 1, ce niveau d'utilisation étant ensuite comparé à un niveau d'utilisation limite, proche d'une situation de calage de la source principale 1 que l'on cherche à éviter.

Ainsi, lorsque la mesure de tension est inférieure ou égale à la valeur seuil de tension prédéterminée, ou en alternative lorsque le niveau d'utilisation déduit à partir de la mesure de tension atteint le niveau d'utilisation limite, le convertisseur 4 est commandé de sorte à ce que la source auxiliaire 3 alimente électriquement la charge électrique 2. La source auxiliaire 3 alimente donc, de manière complémentaire à la source principale 1, la charge électrique 2 empêchant ainsi une surutilisation de la source principale 1. Cette régulation permet, par exemple, dans le cas d'une éolienne de secours de prévenir tout calage de celle-ci dû à des consommations de puissances trop élevées par la charge électrique 2, ou à des chutes de vitesse d'air entraînant les pales 5. Une telle régulation permet, en outre, d'optimiser la charge électrique maximale prélevée sur la source principale 1.

Par ailleurs, lorsque le niveau d'utilisation de la source principale redevient inférieur au niveau d'utilisation limite, la tension mesurée aux bornes du convertisseur 4 redevient supérieure à la valeur de tension prédéterminée car l'on sort d'une situation potentielle de surutilisation de la source principale 1. Le convertisseur 4 est alors commandé pour arrêter l'alimentation électrique complémentaire que fournit la source auxiliaire 3 à la charge électrique 2.

Selon l'invention, l'ensemble des opérations décrites ci-dessus sont réalisées en parallèle, en temps réel et de manière continue au cours du temps. Ces différentes opérations peuvent être commandées et supervisées par un premier dispositif de contrôle 71 interfacé avec la source principale 1 et un deuxième dispositif de contrôle 72 interfacé avec la source auxiliaire 3 par l'intermédiaire du convertisseur 4. Le premier et le deuxième dispositif de contrôle 71, 72 sont des dispositifs indépendants, au sens où il n'existe aucune liaison de communication directe entre ces dispositifs.

Le premier dispositif de contrôle 71 est configuré pour :
- commander l'alimentation électrique de la source principale 1, par exemple commander les variations en tension d'une éolienne de secours en fonction de la fréquence électrique délivrée,
- récupérer (flèche 10) en temps réel au moins un paramètre instantané mesuré caractérisant la source principale 1,
- déterminer le niveau d'utilisation de la source principale 1 en fonction du paramètre instantané récupéré,
- ajuster (flèche 11) la tension de l'alimentation électrique de la source principale en fonction du niveau d'utilisation déterminé pour la source principale 1, par exemple commander la diminution de la tension électrique fournie par la source principale 1 vers une valeur préconfigurée lorsque le niveau d'utilisation de la source principale 1 est supérieur à une valeur seuil prédéterminée.

Le convertisseur 4 étant connecté en parallèle de la source principale 1, le deuxième dispositif de contrôle 72 est alors capable de déterminer la tension électrique en sortie de la source principale 1, c'est-à-dire la tension du bus électrique alimentant la charge électrique 2. Le deuxième dispositif de contrôle 72 est alors configuré pour
- récupérer (flèche 12) une mesure de la tension électrique aux bornes du convertisseur 4,
- comparer cette mesure de tension à une valeur seuil de tension prédéterminée caractérisant par exemple une surutilisation de la source principale 1. Ou en alternative, déduire le niveau d'utilisation de la source principale 1 en fonction de cette mesure de tension et comparer le niveau d'utilisation déduit avec un niveau d'utilisation limite, ce niveau d'utilisation limite correspondant à un niveau d'utilisation de la source principale 1 proche d'une situation de calage,
- commander (flèche 13) via l'intermédiaire du convertisseur 4 l'alimentation électrique de la source auxiliaire 3 en fonction du résultat de la comparaison. Par exemple, commander l'alimentation de la source auxiliaire 3 lorsque la mesure de tension est inférieure ou égale à la tension Vh (ou lorsque le niveau d'utilisation atteint le niveau d'utilisation limite) et commander l'extinction de l'alimentation électrique fournie par la source auxiliaire 3 lorsque la mesure de tension est supérieure à la tension Vh (ou lorsque le niveau d'utilisation de la source principale 1 est supérieur au niveau d'utilisation limite).

La coordination de la source principale 1 et de la source auxiliaire 3 pour alimenter la charge électrique 2 l'aéronef est donc ici uniquement basée sur la détermination du niveau d'utilisation de la source principale 1, déduite ici et à titre d'exemple par rapport à la tension du réseau électrique alimentant la charge électrique 2.

Par ailleurs, dans l'exemple décrit ci-dessus, la caractéristique en tension de la source principale 1 est préconfigurée/pré-dimensionnée, au sens où la valeur de tension est volontairement corrélée à la valeur de fréquence électrique de cette source.

Cependant, un tel pré-dimensionnement n'est pas nécessairement présent. A titre d'exemple, la fréquence électrique de l'éolienne de secours peut proportionnellement varier en fonction de la vitesse de rotation de ses pales 5, et le générateur 6 peut délivrer une valeur de tension constante quelle que soit la fréquence électrique délivrée par l'éolienne.

Ainsi, dans un autre mode de réalisation, le niveau d'utilisation de la source principale 1 est déduit directement de la fréquence électrique qu'elle délivre. La tension délivrée par la source principale 1 n'est alors pas commandée en fonction de sa fréquence, et est par exemple constante à la valeur de tension V0. L'augmentation du niveau d'utilisation de la source principale 1 est directement déduit de sa fréquence. Ainsi, lorsque la fréquence électrique de la source principale 1 chute et atteint une valeur de fréquence prédéterminée, par exemple la fréquence f1, la source auxiliaire 3 est alors commandée pour délivrer une valeur de tension constante Vh, qui vient compléter la tension délivrée par la source principale 1, maintenue à la valeur constante V0.

Un autre mode de réalisation, ne faisant pas partie de la présente invention, pour l'alimentation de la charge électrique 2 peut être envisagé lorsque la source principale 1 est une source rotative génératrice d'énergie électrique. La source principale 1 peut être, à titre d'exemple, une éolienne de secours ou une turbine à gaz.

Une source rotative génératrice d'énergie électrique est couramment associée à un régulateur de vitesse 8 mécanique. A titre d'exemple, pour une éolienne de secours comprenant un générateur 6 électrique synchrone, un régulateur de vitesse 8 permet d'adapter l'angle de calage de ses pales 5 de manière à fournir une vitesse de rotation régulée, et donc une fréquence de rotation régulée dans un intervalle de fréquence, mais non-constante. La fréquence électrique en sortie du générateur 6 électrique de l'éolienne est alors proportionnelle à la fréquence de rotation. Pour un générateur 6 électrique asynchrone, la fréquence de rotation des pales 5 est couramment supérieure à la fréquence électrique en sortie du générateur 6 électrique. La fréquence de rotation des pales 5 demeure cependant régulée dans un intervalle de fréquence prédéterminé, et peut être indirectement déterminée à partir de la fréquence électrique en sortie du générateur électrique 6, par exemple déduite de la fréquence électrique à partir d'un estimateur ou d'un observateur.

Dans des conditions nominales de fonctionnement, la source principale 1 rotative, indifféremment synchrone ou asynchrone, alimente électriquement la charge électrique 2 à une fréquence électrique pouvant être reliée à une fréquence de rotation régulée/contenue dans un intervalle de fréquence prédéterminé. Plus précisément, cette fréquence de rotation de la source principale rotative 1 est régulée par rapport à une valeur de fréquence nominale et les bornes de l'intervalle prédéterminé correspondent aux oscillations en fréquence autour de la fréquence nominale. A titre d'exemple, si la source principale 1 rotative est une éolienne de secours, la borne supérieure et la borne inférieure de l'intervalle prédéterminé se situent typiquement à plus ou moins 10% de la fréquence nominale choisie.

Dans le mode de réalisation envisagé, la fréquence électrique en sortie de la source principale 1 est mesurée et comparée avec une valeur seuil de fréquence. Dans un cas synchrone, la fréquence électrique étant directement reliée à la fréquence de rotation, cette valeur seuil de fréquence peut correspondre à la borne inférieure de l'intervalle de fréquence prédéterminé, ou à une fréquence proche de cette borne inférieure, par exemple supérieure à celle-ci de quelques dizaines de Hertz. Dans un cas asynchrone, cette valeur seuil peut être une fréquence électrique corrélée à l'aide d'un estimateur ou d'un observateur à la borne inférieure de l'intervalle de fréquence prédéterminé, ou corrélée à une fréquence proche de cette borne inférieure, par exemple supérieure à celle-ci de quelques Hertz.

En condition nominale, la source principale 1 rotative est capable de fournir la puissance nécessaire à l'alimentation de la charge électrique 2, la fréquence électrique en sortie de la source principale 1 rotative est donc contenue dans un intervalle prédéterminé et supérieure à une valeur seuil.

A l'inverse, une surutilisation de la source principale 1 rotative peut empêcher d'obtenir une fréquence électrique contenue dans l'intervalle de fréquence souhaité, et l'on risque alors d'observer une chute de la fréquence en dehors de cet intervalle.

Par exemple, dans le cas d'une éolienne de secours synchrone, cette chute de fréquence peut être liée à une diminution de la vitesse de rotation des pales 5 liée à la variation de la vitesse de l'air, empêchant alors l'éolienne de rester dans l'intervalle de fréquence prédéterminé et risquant d'entraîner la calage de l'éolienne. La fréquence électrique en sortie de la source principale 1 rotative traduit donc un niveau d'utilisation de cette source. La valeur seuil de fréquence prédéterminée correspond donc ici à une fréquence limite, traduisant un niveau d'utilisation prédéterminé, avant un risque de calage de la source principale 1 rotative. Cette valeur seuil peut être une fréquence électrique directement liée à la fréquence de rotation de la source principale 1 rotative dans un cas synchrone, ou indirectement liée à cette fréquence de rotation dans un cas asynchrone, par exemple à l'aide d'un observateur ou d'un estimateur.

Pour parer au risque de surutilisation de la source principale 1 rotative, lorsque la fréquence en sortie de la source principale 1 est inférieure à la valeur seuil, la source auxiliaire 3 est alors commandée pour alimenter électriquement, de manière complémentaire à la source principale 1, la charge électrique 2 via l'intermédiaire du convertisseur 4. L'alimentation électrique de la source auxiliaire 3 est alors réalisée de manière à fournir une fréquence électrique synchronisée sur la fréquence électrique de la source principale 1. En effet, la fréquence électrique de la source principale 1 peut osciller de quelques Hz par seconde du fait des conditions extérieures, telles la vitesse de l'air, les turbulences, ou la charge électrique prélevée sur la source. Une telle synchronisation est à titre d'exemple réalisée par un asservissement via une boucle à verrouillage de phase PLL de la fréquence électrique de la source auxiliaire 3 sur la fréquence électrique de la source primaire 1. La charge électrique 2 est alors alimentée à la fois par la source principale 1 rotative et la source auxiliaire 3. Avantageusement, le déclenchement de l'alimentation électrique de la source auxiliaire 3 permet d'éviter que la fréquence électrique de la source principale rotative 1 ne chute en dessous de la valeur seuil. La fréquence électrique délivrée en sortie de la source principale rotative 1 peut donc à minima rester constante à la valeur seuil durant un pic de charge, puis retourner par la suite dans l'intervalle de régulation prédéterminé correspondant à son fonctionnement nominal. Lorsque la fréquence électrique délivrée par la source principale 1 rotative redevient supérieure à la fréquence de valeur seuil, la source auxiliaire 3 est alors commandée pour couper l'alimentation électrique qu'elle fournit à la charge électrique 2. L'alimentation électrique de la source auxiliaire 3 n'est donc déclenchée que pour alléger temporairement la charge de la source principale 1 rotative, le temps que celle-ci retourne dans son domaine de fonctionnement nominal, éloigné d'un risque de calage.

On adapte ainsi la puissance prélevée sur la source principale 1 rotative, tout en se prémunissant d'un risque de surutilisation pouvant engendrer un calage de cette dernière. Une telle commande de la source principale 1 rotative et de la source auxiliaire 3 est particulièrement simple à mettre en oeuvre, la coordination de la source principale 1 rotative et de la source auxiliaire 3 se faisant via la fréquence électrique d'alimentation de la charge électrique 2.

Une fois encore, l'ensemble des opérations décrites ci-dessus sont réalisées en temps réel et de manière continue au cours du temps. Ces différentes opérations peuvent être commandées et supervisées par un premier dispositif de contrôle 71 interfacé avec la source principale 1 et un deuxième dispositif de contrôle 72 interfacé avec la source auxiliaire 3 par l'intermédiaire du convertisseur 4. Le premier et le deuxième dispositif de contrôle 71, 72 sont des dispositifs indépendants, au sens où il n'existe aucune liaison de communication directe entre ces dispositifs.

Le premier dispositif de contrôle 71 est configuré pour commander l'alimentation électrique de la source principale 1 rotative. A titre d'exemple, pour une éolienne de secours comprenant un générateur 6 électrique synchrone, le premier dispositif de contrôle 71 est configuré pour réceptionner (flèche 10) le niveau de tension en sortie de la génératrice et commander (flèche 11) la source principale 1 de manière à réguler le niveau de tension à une valeur fixe.

Le convertisseur 4 étant connecté en parallèle de la source principale 1, le deuxième dispositif de contrôle 72 est alors capable de déterminer la fréquence électrique en sortie de la source principale 1, c'est-à-dire la fréquence du bus électrique alimentant la charge électrique 2.

Le deuxième dispositif de contrôle 72 est alors configuré pour
- récupérer (flèche 12) une mesure de la fréquence électrique aux bornes du convertisseur 4,
- comparer la mesure de fréquence électrique avec la valeur seuil de fréquence,
- commander (flèche 13) via l'intermédiaire du convertisseur 4 l'alimentation électrique de la charge électrique 2 par la source auxiliaire 3 à une fréquence électrique synchronisée sur la fréquence électrique de la source principale, lorsque la fréquence électrique en sortie de la source principale 1 rotative atteint la valeur seuil de fréquence.

En alternative, le deuxième dispositif de contrôle 72 peut déduire de la mesure de fréquence électrique le niveau d'utilisation de la source principale 1 rotative, comparer ce niveau d'utilisation par rapport au niveau d'utilisation limite, traduisant un niveau de surutilisation de cette source, et commander l'alimentation de la source auxiliaire 3 en fonction du résultat de cette comparaison.

Avantageusement, un tel mode de réalisation pour une source principale 1 rotative est particulièrement simple à mettre en oeuvre, celui-ci ne nécessitant aucune modification (ex : pré-dimensionnement des caractéristiques statiques en tension, reconfiguration du générateur 6 électrique) des sources rotatives (ex : éolienne de secours, turbines) existantes. La coordination de la source principale 1 rotative et de la source auxiliaire 3 pour alimenter la charge électrique 2 de l'aéronef est donc ici uniquement basée sur la détermination du niveau d'utilisation de la source principale 1, déterminé ici à partir de la fréquence électrique en sortie de la source principale. Cette fréquence électrique permet de déterminer directement dans un cas synchrone et indirectement (via un estimateur ou un observateur) dans un cas asynchrone la fréquence de rotation de la source principale, cette détermination de fréquence étant couramment implémentée pour les sources principales rotatives existantes.

## Revendications

1. Procédé d'alimentation en énergie électrique d'au moins une charge électrique (2) dans un aéronef, ce procédé comprenant :
- une fourniture d'une source principale (1) générant de l'électricité et une source auxiliaire (3) pour stocker de l'électricité connectée en parallèle à la source principale via un convertisseur (4) de puissance continu alternatif DC/AC, le procédé étant **caractérisé par**:
- un fonctionnement de la source principale (1), le fonctionnement comprenant :
∘ l'alimentation électrique de ladite au moins une charge électrique (2) par la source principale (1) ;
∘ la mesure d'au moins un paramètre instantané caractérisant la source principale (1) ;
∘ la détermination d'un niveau d'utilisation de la source principale (1) à partir dudit au moins un paramètre instantané mesuré ;
o l'ajustement de la tension de la source principale (1) en fonction du niveau d'utilisation déterminé ;
- un fonctionnement de la source auxiliaire (3), le fonctionnement comprenant :
∘ la mesure d'une tension en sortie de la source principale (1) sur des bornes du convertisseur (4) de puissance continu alternatif DC/AC ;
∘ la comparaison de la tension mesurée en sortie de la source principale (1) avec une valeur seuil de tension (Vh) prédéterminée ; et
∘ l'alimentation électrique de ladite au moins une charge électrique (2) par la source auxiliaire (3) lorsque la tension mesurée en sortie de la source principale (1) est inférieure à la valeur seuil prédéterminée, de manière à fournir un complément d'alimentation électrique à ladite au moins une charge électrique (2),
- le fonctionnement de la source principale (1) et le fonctionnement de la source auxiliaire (3) étant réalisés en parallèle et indépendamment l'un de l'autre.

2. Procédé selon la revendication 1, dans lequel le fonctionnement de la source principale (1) comprend en outre une commande de diminution de la tension électrique fournie par la source principale (1) vers une valeur préconfigurée lorsque le niveau d'utilisation de la source principale (1) est supérieur à un niveau d'utilisation prédéterminée.

3. Procédé selon la revendication 1 ou 2, dans lequel le fonctionnement de la source auxiliaire (3) comprend une étape d'extinction de l'alimentation électrique fournie par la source auxiliaire (3) lorsque la tension mesurée en sortie de la source principale (1) est supérieure à la valeur seuil de tension (Vh) prédéterminée.

4. Procédé selon l'une quelconque des revendications 1 à 3, dans lequel la source principale (1) est une éolienne de secours, et pour lequel ledit au moins un paramètre instantané est le couple de l'éolienne, la fréquence électrique d'alimentation de la charge électrique (2), la vitesse de rotation des pales (5) de l'éolienne et/ou le pas des pales (5) de l'éolienne.

5. Procédé selon l'une quelconque des revendications 1 à 3, dans lequel la source principale (1) est une pile à combustible, et pour lequel ledit au moins un paramètre instantané est un débit de réactifs, une température de la pile et/ou un taux d'hydratation de la pile.

6. Procédé selon l'une quelconque des revendications 1 à 3, dans lequel la source principale (1) est une unité de puissance auxiliaire, et pour lequel ledit au moins un paramètre instantané est un débit de carburant circulant dans cette unité et/ou une température de cette unité.

7. Système d'alimentation en énergie électrique d'au moins une charge électrique (2) dans un aéronef, ce système comprenant
- une source principale (1) d'énergie électrique électriquement couplée à ladite au moins une charge électrique (2) ;
- une source auxiliaire (3) de stockage d'énergie électrique connectée en parallèle de la source principale (1) par l'intermédiaire d'un convertisseur (4) de puissance continu alternatif DC/ AC et électriquement couplée à ladite au moins une charge électrique (2) ; le système étant **caractérisé par**:
- un premier dispositif de contrôle (71) configuré pour
∘ commander l'alimentation électrique de ladite au moins une charge électrique (2) par la source principale (1) génératrice d'énergie électrique ;
∘ déterminer un niveau d'utilisation de la source principale (1) à partir d'une mesure d'au moins un paramètre instantané caractérisant cette source ;
∘ ajuster la tension de la source principale (1) en fonction du niveau d'utilisation déterminé ;
- un deuxième dispositif de contrôle (72) configuré pour
∘ récupérer une mesure de la tension électrique de sortie de la source principale (1) aux bornes du convertisseur (4) ;
∘ comparer la tension mesurée en sortie de la source principale (1) avec une valeur seuil de tension prédéterminée ; et
∘ lorsque la tension mesurée en sortie de la source principale (1) est inférieure à la valeur seuil de tension prédéterminée, commander via l'intermédiaire du convertisseur (4) l'alimentation électrique de ladite au moins une charge électrique (2) par la source auxiliaire (3) de stockage d'énergie électrique, de manière à fournir un complément d'alimentation électrique à la charge électrique (2),
- le premier dispositif de contrôle (71) et le deuxième dispositif de contrôle (72) étant configurés pour fonctionner en parallèle et indépendamment l'un de l'autre, le premier dispositif de contrôle (71) et le second dispositif de contrôle (72) étant dépourvus de liaison de communication directe entre eux.

8. Système selon la revendication 7 dans lequel
- le premier dispositif de contrôle (71) est en outre configuré pour commander la diminution de la tension électrique fournie par la source principale (1) vers une valeur préconfigurée lorsque le niveau d'utilisation de la source principale (1) est supérieur à un niveau d'utilisation prédéterminé ;
- le deuxième dispositif de contrôle (72) est en outre configuré pour commander l'extinction de l'alimentation électrique fournie par la source auxiliaire (3) lorsque la tension mesurée en sortie de la source principale (1) est supérieure à la valeur seuil prédéterminée.

## Patentansprüche

1. Verfahren zur Versorgung von mindestens einer elektrischen Last (2) in einem Luftfahrzeug mit elektrischer Energie, wobei dieses Verfahren umfasst:
- Bereitstellen einer Hauptquelle (1), die den Strom erzeugt, und einer Hilfsquelle (3) zum Speichern des Stroms, die über einen Gleichstrom-/Wechselstrom-, DC/AC-Wandler (4) parallel mit der Hauptquelle verbunden ist, wobei das Verfahren **gekennzeichnet ist durch**:
- einen Betrieb der Hauptquelle (1), wobei der Betrieb umfasst:
∘ elektrisches Versorgen der mindestens einen elektrischen Last (2) durch die Hauptquelle (1),
o Messen von mindestens einem Momentparameter, der die Hauptquelle (1) kennzeichnet,
o Bestimmen eines Nutzungsgrads der Hauptquelle (1) anhand des mindestens einen gemessenen Momentparameters,
o Anpassen der Spannung der Hauptquelle (1) in Abhängigkeit des bestimmten Nutzungsgrads,
- einen Betrieb der Hilfsquelle (3), wobei der Betrieb umfasst:
∘ Messen einer Spannung an dem Ausgang der Hauptquelle (1) an Anschlüssen des Gleichstrom-/Wechselstrom-, DC/AC-Wandlers (4),
∘ Vergleichen der an dem Ausgang der Hauptquelle (1) gemessenen Spannung mit einem vorbestimmten Spannungsschwellenwert (Vh), und
∘ elektrisches Versorgen der mindestens einen elektrischen Last (2) durch die Hilfsquelle (3), wenn die an dem Ausgang der Hauptquelle (1) gemessene Spannung kleiner als der vorbestimmte Schwellenwert ist, um der mindestens einen elektrischen Last (2) eine zusätzliche elektrische Versorgung bereitzustellen,
- wobei der Betrieb der Hauptquelle (1) und der Betrieb der Hilfsquelle (3) parallel und unabhängig voneinander umgesetzt werden.

2. Verfahren nach Anspruch 1, wobei der Betrieb der Hauptquelle (1) ferner einen Befehl zur Verringerung der durch die Hauptquelle (1) bereitgestellten elektrischen Spannung in Richtung eines voreingestellten Wertes umfasst, wenn der Nutzungsgrad der Hauptquelle (1) größer als ein vorbestimmter Nutzungsgrad ist.

3. Verfahren nach Anspruch 1 oder 2, wobei der Betrieb der Hilfsquelle (3) einen Schritt des Abschaltens der durch die Hilfsquelle (3) bereitgestellten elektrischen Versorgung umfasst, wenn die an dem Ausgang der Hauptquelle (1) gemessene Spannung größer als der vorbestimmte Spannungsschwellenwert (Vh) ist.

4. Verfahren nach einem der Ansprüche 1 bis 3, wobei die Hauptquelle (1) eine Notwindkraftanlage ist und für das der mindestens eine Momentparameter das Drehmoment der Windkraftanlage, die elektrische Versorgungsfrequenz der elektrischen Last (2), die Drehzahl der Flügel (5) der Windkraftanlage und/oder der Anstellwinkel der Flügel (5) der Windkraftanlage ist.

5. Verfahren nach einem der Ansprüche 1 bis 3, wobei die Hauptquelle (1) eine Brennstoffzelle ist und für das der mindestens eine Momentparameter eine Flussrate der Reaktanten, eine Temperatur der Zelle und/oder ein Hydratationsgrad der Zelle ist.

6. Verfahren nach einem der Ansprüche 1 bis 3, wobei die Hauptquelle (1) eine Hilfsenergieeinheit ist und für das der mindestens eine Momentparameter ein in dieser Einheit zirkulierender Kraftstoffdurchsatz und/oder eine Temperatur dieser Einheit ist.

7. System zur Versorgung von mindestens einer elektrischen Last (2) in einem Luftfahrzeug mit elektrischer Energie, wobei dieses System umfasst:
- eine Hauptquelle (1) für elektrische Energie, die elektrisch mit der mindestens einen elektrischen Last (2) gekoppelt ist,
- eine Hilfsquelle (3) zum Speichern der elektrischen Energie, die mittels eines Gleichstrom-/Wechselstrom-, DC/AC-Wandlers (4) parallel mit der Hauptquelle (1) verbunden und elektrisch mit der mindestens einen elektrischen Last (2) gekoppelt ist, wobei das System **gekennzeichnet ist durch**:
- eine erste Steuervorrichtung (71), die ausgestaltet ist zum
∘ Befehlen der elektrischen Versorgung der mindestens einen elektrischen Last (2) **durch** die Hauptquelle (1), die elektrische Energie erzeugt,
∘ Bestimmen eines Nutzungsgrads der Hauptquelle (1) anhand einer Messung von mindestens einem Momentparameter, der diese Quelle kennzeichnet,
∘ Anpassen der Spannung der Hauptquelle (1) in Abhängigkeit des bestimmten Nutzungsgrads,
- eine zweite Steuervorrichtung (72), die ausgestaltet ist zum
∘ Abrufen einer Messung der elektrischen Spannung an dem Ausgang der Hauptquelle (1) an Anschlüssen des Wandlers (4),
∘ Vergleichen der an dem Ausgang der Hauptquelle (1) gemessenen Spannung mit einem vorbestimmten Spannungsschwellenwert,
und
∘ wenn die an dem Ausgang der Hauptquelle (1) gemessene Spannung kleiner als der vorbestimmte Spannungsschwellenwert ist, Befehlen, mittels des Wandlers (4), der elektrischen Versorgung der mindestens einen elektrischen Last (2) **durch** die Hilfsquelle (3) mit gespeicherter elektrischer Energie, um der elektrischen Last (2) eine zusätzliche elektrische Versorgung bereitzustellen,
- wobei die erste Steuervorrichtung (71) und die zweite Steuervorrichtung (72) dazu ausgestaltet sind, parallel und unabhängig voneinander zu arbeiten, wobei die erste Steuervorrichtung (71) und die zweite Steuervorrichtung (72) frei von direkter Kommunikationsverbindung miteinander sind.

8. System nach Anspruch 7, wobei
- die erste Steuervorrichtung (71) ferner dazu ausgestaltet ist, die Verringerung der elektrischen Spannung, die durch die Hauptquelle (1) bereitgestellt wird, in Richtung eines voreingestellten Wertes zu befehlen, wenn der Nutzungsgrad der Hauptquelle (1) größer als ein vorbestimmter Nutzungsgrad ist,
- die zweite Steuervorrichtung (72) ferner dazu ausgestaltet ist, die Abschaltung der elektrischen Versorgung, die durch die Hilfsquelle (3) bereitgestellt wird, zu befehlen, wenn die an dem Ausgang der Hauptquelle (1) gemessene Spannung größer als der vorbestimmte Schwellenwert ist.

## Claims

1. A method of electrically powering at least one electrical load (2) in an aircraft, the method comprising:
- providing a main source (1) generating electricity and an auxiliary source (3) for storing electricity connected in parallel with the main source (1) via a DC/AC power converter (4),
the method being **characterized by**:
- an operation of the main source, the operation comprising:
∘ electrically powering said at least one electrical load (2) by means of the main source (1);
∘ measuring at least one instantaneous parameter characterizing the main source (1);
∘ determining a level of use of the main source (1) from said at least one measured instantaneous parameter;
∘ adjusting the voltage of the main source (1) as a function of the determined level of use;
- an operation of the auxiliary source (3), the operation comprising:
∘ measuring an output voltage from the main source (1) on outputs of the DC/AC power converter (4);
∘ comparing the voltage measured on the output of the main source (1) with a predetermined voltage threshold value (Vh); and
∘ electrically powering said at least one electrical load (2) from the auxiliary source (3) whenever the voltage measured on the output of the main source (1) is less than the predetermined threshold value, so as to supply additional electric power to the electrical load (2),
the operation of the main source (1) and the operation of the auxiliary source (3) being realized in parallel and independently from each other.

2. A method according to claim 1, wherein the operation of the main source (1) further comprises causing the voltage supplied by the main source (1) to decrease towards a preconfigured value whenever the level of use of the main source (1) is greater than a predetermined level of use.

3. A method according to claim 1 or claim 2, wherein the operation of the auxiliary source (3) includes a step of switching off the electrical power supplied by the auxiliary source (3) whenever the voltage measured at the output from the main source (1) is greater than the predetermined voltage threshold value (Vh).

4. A method according to any one of claims 1 to 3, wherein the main source (1) is an emergency RAT and for which said at least one instantaneous parameter is the torque of the RAT, the electrical frequency of the power supply to the electrical load (2), the speed of rotation of the blades (5) of the RAT, and/or the pitch of the blades (5) of the RAT.

5. A method according to any one of claims 1 to 3, wherein the main source (1) is a fuel cell, and wherein said at least one instantaneous parameter is a reagent flow rate, a temperature of the cell, and/or a degree of hydration of the cell.

6. A method according to any one of claims 1 to 3, wherein the main source (1) is an APU, and wherein said at least one instantaneous parameter is a flow rate of fuel delivered to said APU and/or a temperature of said APU.

7. A system for electrically powering at least one electrical load (2) in an aircraft, the system comprising:
- a main source (1) of electricity electrically connected to said at least one electrical load (2);
- an auxiliary source (3) for storing electricity connected in parallel with the main source (1) via a DC/AC power converter (4) and electrically connected to at least one electrical load (2);
the system being **characterized in that** it comprises a first control device (71) configured:
- to cause said at least one electrical load (2) to be electrically powered by the main source (1) that generates electricity;
- to determine a level of use of the main source (1) from a measurement of at least one instantaneous parameter characterizing said source; and
- to adjust the voltage of the main source (1) as a function of the determined level of use;
the system being **characterized in that** it further comprises a second control device (72) configured:
- to recover a measurement of the voltage across the terminals of the converter (4);
- to compare the measured voltage with a predetermined voltage threshold value; and
- whenever the measured voltage is less than the predetermined voltage threshold value, to act via the converter (4) to cause said at least one electrical load (2) to be powered electrically by the auxiliary source (3) for storing electricity, so as to supply additional electric power to the electrical load (2),
- the first control device (71) and the second control device (72) being configured to operate in parallel and independently from each other, the frist control device (71) and the second control device (72) being deprived of any direction communication connection between them.

8. A system according to claim 7, wherein:
- the first control device (71) is also configured to cause the voltage supplied by the main source (1) to decrease towards a preconfigured value when the level of use of the main source (1) is greater than a predetermined level of use; and
- the second control device (72) is also configured to cause the electrical power supplied by the auxiliary source (3) to be switched off when the voltage measured at the output from the main source (1) is greater than the predetermined threshold value.
